# EUROPEAN PATENT APPLICATION

(11) **EP 0 582 357 A1**
(43) Date of publication of application: **09.02.1994**
(21) Application number: 93250080.4
(22) Date of filing: 12.03.1993
(51) Int. Cl.: B26D 7/26, B26F 1/44

(54) **Quick changeover die clamping apparatus for platen die-cutting machines**

(30) Priority: 04.08.1992 US 925577
(71) Applicant: Lawrence Paper Company, Lawrence Kansas 66044 (US)
(72) Inventor: Meeks, William R., Lawrence, Kansas 66046 (US)
(74) Representative: UEXKÜLL & STOLBERG

(57) **Abstract**

Apparatus (20) is provided for holding a cutting die (112) in place upon a platen (26), and for permitting easy changeover or modification of the die (112). The apparatus (20) includes a frame assembly (30) having a pair of spaced apart, die-holding frame arms (36, 38) pivotally secured to the platen (26) and movable by means of a piston and cylinder assembly (86) between a die-holding position adjacent the platen (26) and a pivoted away die-release position permitting easy removal of the die (112) from the frame arms (36, 38). Preferably, the frame arms (36, 38) include elongated, beveled pieces (100, 102) as well as locating blocks (104, 106); these components cooperate with appropriately configured beveled surfaces (120, 122) and notches (124, 126) on the die backing support (114), in order to precisely locate the die (112) within the frame assembly (30). An adjustable support (128) for holding dies (150) of smaller, non-standard dimensions is also provided which can be positioned within the frame assembly (30) in the same manner as die (112).

## Description

### Background of the Invention

### 1. Field of the Invention

The present invention is broadly concerned with die changeover apparatus for platen-type die cutters commonly in use in the box-making industry and other contexts where high production rates are important. More particularly, it is concerned with such changeover apparatus which permits rapid, easy replacement of cutting dies and precise positioning thereof in a fraction of the time that it commonly takes to change over a plate die. In preferred forms, the changeover apparatus includes a pair of spaced apart die-holding frame arms which are pivotally secured adjacent the ends thereof to a platen; means is provided for selective pivoting of the arms between a die-holding operative position adjacent the platen face, and a release position spaced from the platen permitting ready removal and replacement of a cutting die held by the frame arms. In addition, an adjustable support frame adapted to be carried by the frame arms is also provided, with the support frame accommodating dies of varying, non-standard dimensions.

### 2. Description of the Prior Art

Manufacturers of cardboard boxes, clothing and other mass-produced items often make use of platen-type die cutters. This equipment typically includes a pair of shiftable platen members, one of which carries a die-cutting plate provided with appropriately configured cutting rules. In use, the machine operator manually inserts a blank to be cut between the platens, and the latter are brought to together to complete the die-cutting. Thereupon, the platens are opened, and the operator removes the cut piece and inserts a new blank.

The cutting dies used with this type of equipment traditionally include a large rectangular piece of plywood backing which support the steel rules. These rules often have adjacent sponge rubber elements serving to push cut material (e.g., corrugated stock) away from and off the rules after the machine platens are separated. Normally, the cutting dies are attached to the machine platen by means of bolts. In order to obtain the best possible die-cutting results, the cutting dies must be very carefully mounted on the associated platen. If a die fails to cut completely through the material, the die rules are usually either warped or worn, and experience has proved that only a few thousandths of an inch of effective cutting depth can make a very noticeable difference in cutting quality. If such conditions occur, the machine operator must attempt to reset the die by first unbolting the plywood support from the platen, placing tape on the rear surface of the plywood support at the suspected trouble region, and reinstalling the die. The machine must then be operated for a period to ascertain whether the cutting die has been properly modified.

These same problems occur when it is necessary to change a cutting die when a production run has been completed. Here again, it is often necessary to repetitively remove the die, place tape(s) on the back of the plywood support, and reinstall the die until an accurate placement is realized.

As can be appreciated, these machine adjustments are time-consuming and require considerable operator skill. Indeed, it is not unusual for a die changeover or adjustment to consume 45 minutes to 1 hour of time, and during this period, the machine is completely idle.

U.S. Patent No. 3,610,021 depicts a punch press machine of the type having a vertically reciprocating ram, wherein the upper and lower working tool members each are engaged by a pair of opposed piston cylinder mounting assemblies respectively oriented at the sides of the tool. In the context of an industrial punch press for fine-blanking operations, U.S. Patent 3,673,908 depicts a piston cylinder assembly designed to engage and hold a cutting tool. These expedients are not usable in platen die-cutting machines, because of the close tolerances which must be observed and the small spaces between the machine platens.

There is accordingly a real and unsatisfied need in the art for a die-holding and changeover apparatus specifically designed to solve the excessive downtime and precision positioning problems inherent in the use of platen-type die-cutting machinery.

### Summary of the Invention

The present invention overcomes the problems outlined above and provides improved apparatus for holding a cutting die in place upon a platen, and for permitting easy changeover of cutting dies with a minimum of downtime. Broadly, the apparatus of the invention includes frame means having a pair of spaced apart die-holding frame arms, each presenting a first and a second end. The frame arms are mounted in association with a die platen for pivotal movement of the arms about respective axes proximal to the first ends thereof, in order to permit movement of the arms between a die-holding position adjacent the platen and a die-release position wherein the second frame arm ends are spaced from the platen a distance permitting removal of a cutting die from the frame. Finally, the overall apparatus includes means coupled with the frame arms for selective pivotal movement thereof between the die-holding and die-releasing positions thereof.

In preferred forms, each of the frame arms includes a beveled surface for engaging a correspondingly configured cutting die, in order to firmly hold the die in place and locate the rules thereof precisely relative to the associated platen. In addition, each of the frame arms advantageously includes a inwardly-extending retaining plate to provide further die support. Movement of the frame arms is effected by means of a piston and cylinder assembly which is coupled via a toggle linkage to the frame arms so that the frame can be selectively moved between the die-holding and die-releasing positions.

An adjustable support also forms a part of the present invention, and is designed for holding non-standard cutting dies of varying effective dimensions. The adjustable support is in turn held by the frame arms, so that, in combination, the die-holding apparatus and adjustable support can accommodate virtually any die. The support device preferably includes a pair of elongated, spaced apart, opposed rails each presenting axially spaced ends and including structure intermediate these ends for engaging the margin of a cutting die. A connector leg is coupled to each of the rail ends, with the longitudinal axes of the legs being transverse to the longitudinal axes of the rails; in this fashion, the connector legs define a connector leg set proximal to each end of the rails, with each of the sets having a pair of juxtaposed, oppositely extending legs respectively secured to a corresponding rail. Connector means is provided for joining the legs of each set thereof to permit relative axial shifting of the legs of each set. This in turn effects corresponding movement of the rails relative to each other. Finally, the connector means includes structure for locking the connector leg sets at one of a number of shifted positions.

Preferably, each of the juxtaposed connector legs includes a tooth rack section, whereas the connector means includes a rotatable pinion operatively engaging the rack sections. Manual rotation of the pinions thus permits selective adjustment of the die support device.

### Brief Description of the Drawings

Figure 1 is a perspective view of a clamshell-type die-cutting machine having the die changeover apparatus of the invention installed thereon and holding a cutting die in its operative position adjacent one of the platens;
Fig. 2 is a view similar to that of Fig. 1, but showing the changeover apparatus in its open, die-release position, and with the cutting die removed;
Fig. 3 is an isometric view illustrating the construction of the die changeover apparatus;
Fig. 4 is a fragmentary view with parts shown in phantom and depicting the shifting movement of the changeover apparatus between the operative and die-release positions thereof;
Fig. 5 is a front elevational view of the changeover apparatus, with a cutting die supported by the apparatus being depicted in phantom;
Fig. 6 is a front elevational view of an adjustable die-holding support in accordance with the invention, and illustrating in phantom a supported die;
Fig. 7 is a fragmentary side view with parts broken away for clarity of one end of the adjustable support device, illustrating the rack and pinion adjustment mechanism thereof;
Fig. 8 is an isometric view of a die-engaging rail forming a part of the adjustable die support device illustrated in Fig. 6;
Fig. 9 is a sectional view taken along line 9-9 of Fig. 5;
Fig. 10 is a sectional view taken along line 10-10 of Fig. 5;
Fig. 11 is a sectional view taken along line 11-11 of Fig. 7;
Fig. 12 is a sectional view taken along line 12-12 of Fig. 7; and
Fig. 13 is a front elevational view of typical cutting die including a plywood backing support, and metallic rule secured to one face of the plywood support.

### Detailed Description of the Preferred Embodiment

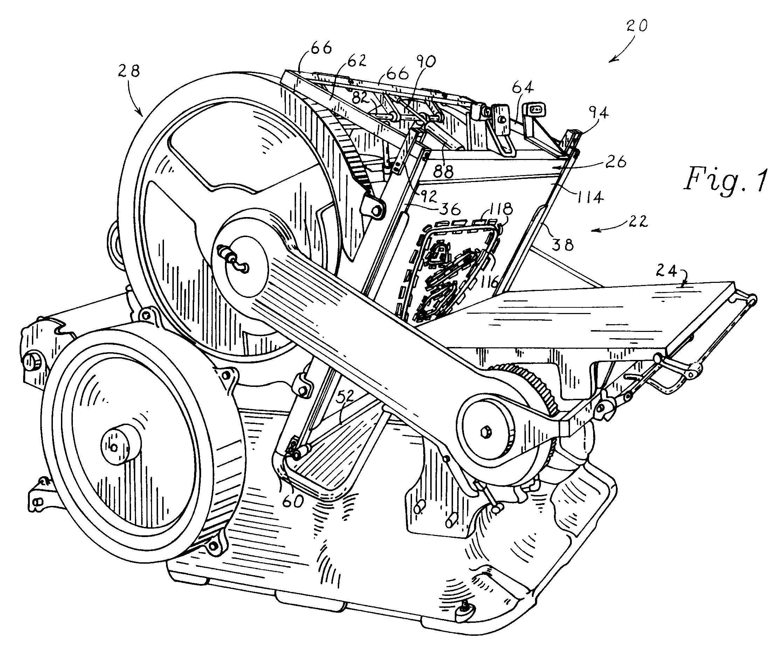

Turning now to the drawings, and particularly Figs 1-2, a platen-type die cutter 20 is illustrated, with the die-holding apparatus 22 mounted thereon. Broadly speaking, the die cutter 20 includes a pair of relatively shiftable platens 24, 26, together with wholly conventional powered operating means 28 for repetitively moving the platens together to effect a die cut, followed by separation of the platens. In traditional practice, a die plate is secured by bolts to upper platen 26, and an operator feeds a blank into the cutter 20 when the platens are separated as illustrated in Fig. 1. When the platens are pivoted together, the blank is die cut, and upon separation of the platens, the operator removes the cut blank and inserts a new blank.

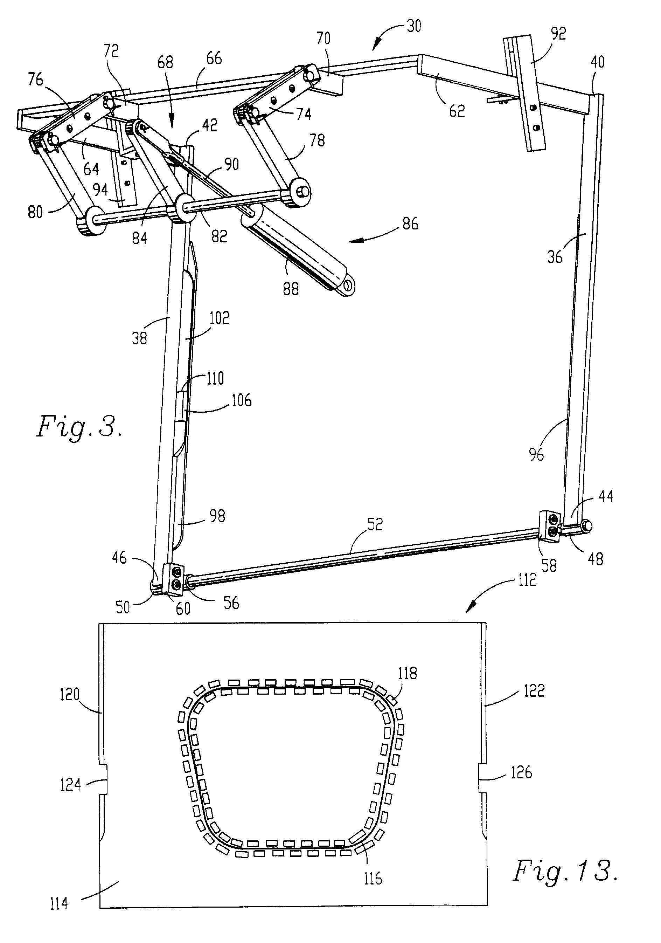

The die-holding apparatus 22 broadly includes a frame assembly 30 (see Fig. 3), means 32 mounting the frame means in association with the platen 26, and motive means 34 for selectively moving the frame assembly 30 between a die-holding and die-releasing position relative to platen 26.

In more detail, the frame assembly 30 includes a pair of elongated, opposed, laterally spaced apart metallic arms 36, 38 each presenting an upper end 40, 42 and a corresponding lower end 44, 46. Ferrules 48, 50 are respectively secured to the lowermost ends 44, 46 of the arms 36, 38, and an elongated, transversely extending pivot rod 52 extends between and is received within each of the ferrules 48, 50. The rod 52 further includes a pair of sleeves 54, 56 respectively located adjacent the corresponding ferrules 48, 50. The pivot rod 52 is rotatable relative to the sleeves 54, 56, and the latter have bored connection blocks 58, 60 secured thereto. As best seen in Figs. 1, 2 and 4, the respective connection blocks 58, 60 are secured by bolts or other appropriate fasteners to upper platen 26 adjacent the lower end thereof. It will therefore be seen that the frame arms 36, 38 are pivotal relative to the platen 26.

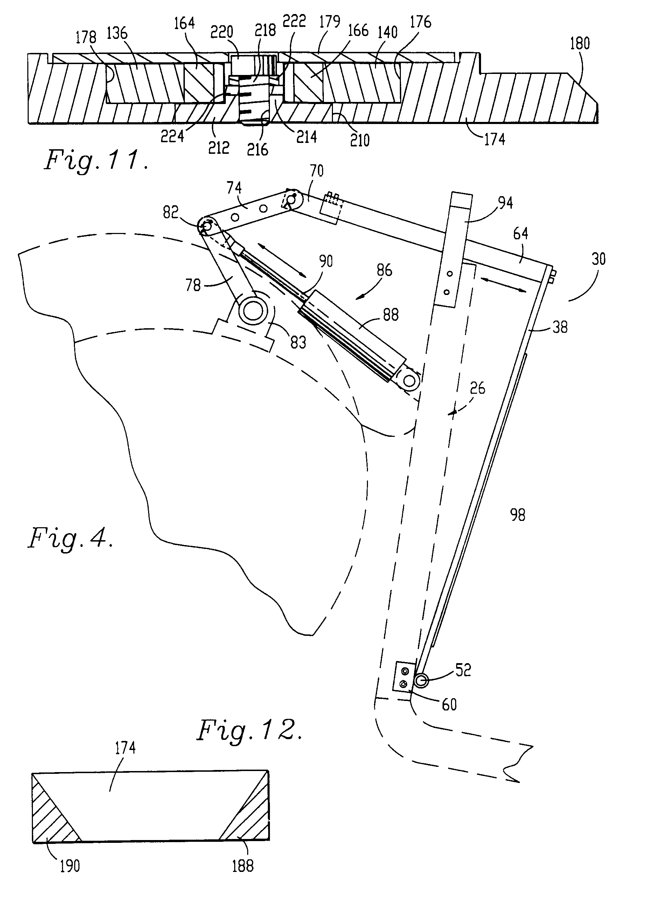

The overall frame assembly 30 further includes a pair of rearwardly extending arms 62, 64 which are respectively secured to the upper ends 40, 42 of the frame arms 36, 38. The rearwardly extending arms 62, 64 are interconnected adjacent the rearward ends thereof by means of cross-piece 66. A toggle linkage assembly 68 is secured to cross-piece 66 and includes a pair of stationary, rearwardly extending struts 70, 72 each supporting a bifurcated pivotal link 74, 76. Lower links 78, 80 are respectively pivoted to the rearmost ends of the links 74, 76, and a transverse rod 82 interconnects the links 78, 80 adjacent their lowermost ends. The rod 82 is in turn connected to the frame of machine 20 by means of a pair of bearings 83 (Fig. 4) located just inboard of the lower links 78, 80; the bearings 83 permit pivotal movement of the rod 82. A central operator 84 is also affixed to rod 82 as shown. A piston and cylinder assembly 86 including cylinder 88 and reciprocable rod 90 is provided for operation of linkage assembly 68 and consequent fore and aft movement of frame assembly 30. As best seen in Fig. 4, the end of cylinder 88 remote from operator 84 is pivotally secured to the rear surface of upper platen 26. The outermost bifurcated end of rod 90 is in turn pivotally coupled to the upper end of operator 84.

A pair of upstanding, slotted guides 92, 94 are respectively affixed to the opposed sides of platen 26, and are adapted to slidably receive the rearwardly extending arms 62, 64 during shifting movement thereof.

Each of the upright frame arms 36, 38 is provided with specialized structure for securely holding a conventional cutting die within the frame assembly, and for precisely locating the die therein. Specifically, each of the arms is provided with a forward, elongated, inwardly extending retainer plate 96, 98, as well as an elongated, but somewhat shorter beveled piece 100, 102 behind each retainer plate. In addition, a pair of locating blocks 104, 106 each having a corresponding uppermost abutment surface 108, 110 is mounted atop each beveled piece 100, 102 adjacent the lower end thereof. the purpose of the blocks 104, 106 is to vertically locate a die member within frame assembly 30.

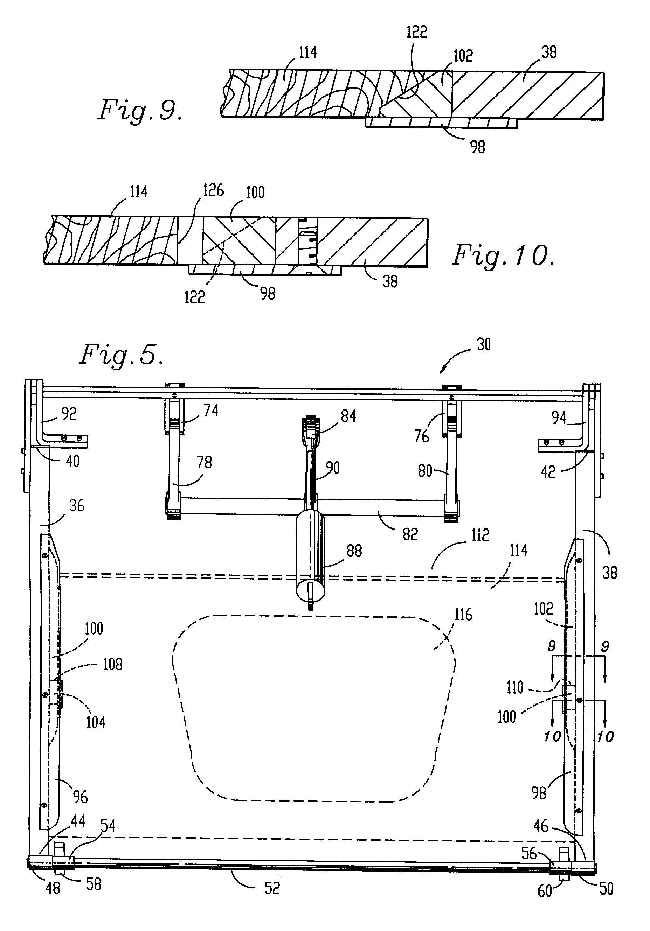

Attention is next directed to Fig. 13 which illustrates a conventional cutting die 112 useful in the context of the present invention. The die 112 includes a plywood backing board 114 supporting a forwardly extending sharpened metallic rule 116 thereon. Short stretches of resilient foam rubber 118 are disposed about rule 116 as illustrated, for the purpose of facilitating removal of a cut blank from the rule. It will also be seen that the board 114 includes, along the side margins thereof, elongated beveled surfaces 120, 122, with each of the latter being interrupted by a cut-out notch 124, 126. Fig. 5 illustrates a die 112 mounted within frame assembly 30. It will be observed in this respect that the individual beveled surfaces 120, 122 mate with the corresponding beveled pieces 102, 100, and that the board notches 124, 126 receive the locating blocks 104, 106 such that the surfaces 108, 110 of the blocks abut the upper horizontal surfaces of the corresponding notches 124, 126.

In the event that a given die does not have the standard configuration of that illustrated in Fig. 13, use can be made of an adjustable support 128 adapted to hold such non-standard dies; the support 128 is in turn designed to fit within the frame assembly 30.

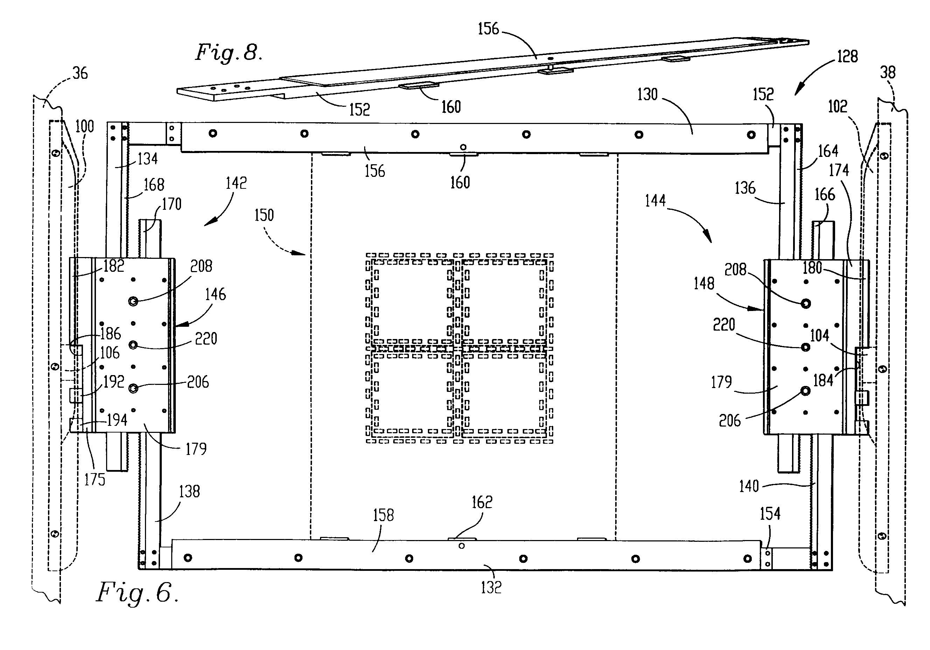

In more detail, the adjustable support 128 includes a pair of elongated, vertically spaced apart, opposed rails 130, 132, with a connector leg 134, 136 coupled to the ends of rail 130, and a connector leg 138, 140 secured to the opposite ends of opposed rail 132. As best seen in Fig. 6, the adjacent connector legs 134, 138 define a connector leg set 142 adjacent one end of the spaced rails, whereas the proximal connector legs 136, 140 cooperatively define another connector leg set 144 at the remaining end of the rails. A connector assembly 146 is provided for adjustably interconnecting the legs of set 142, and similarly a connector assembly 148 serves to interconnect the legs of set 144. The connector assemblies 146, 148 are operable for relative axial shifting of the legs 134, 138 and 136, 140 in order to effect corresponding movement of the rails 130, 132. Moreover, the assemblies 146, 148 are designed to lock the associated connector legs at any one of a number of shifted positions, so as to accommodate dies, such as the die 150 illustrated in phantom in Fig. 6, and hold these dies for cutting operations.

In greater detail, each of the rails 130, 132 includes an elongated base section 152, 154, as well as a retainer plate 156, 158 extending inwardly from the corresponding base section. A plurality of inwardly extending metallic tabs 160 are affixed to base 152 in spaced relationship to retainer plate 156, and similarly tabs 162 are affixed to base section 154 in spaced relationship to retainer plate 158. Again referring to Fig. 6, it will be seen that the plywood mounting board forming a part of the die 150 is captively retained between the tabs 160, 162 and the associated retainer plates 156, 158.

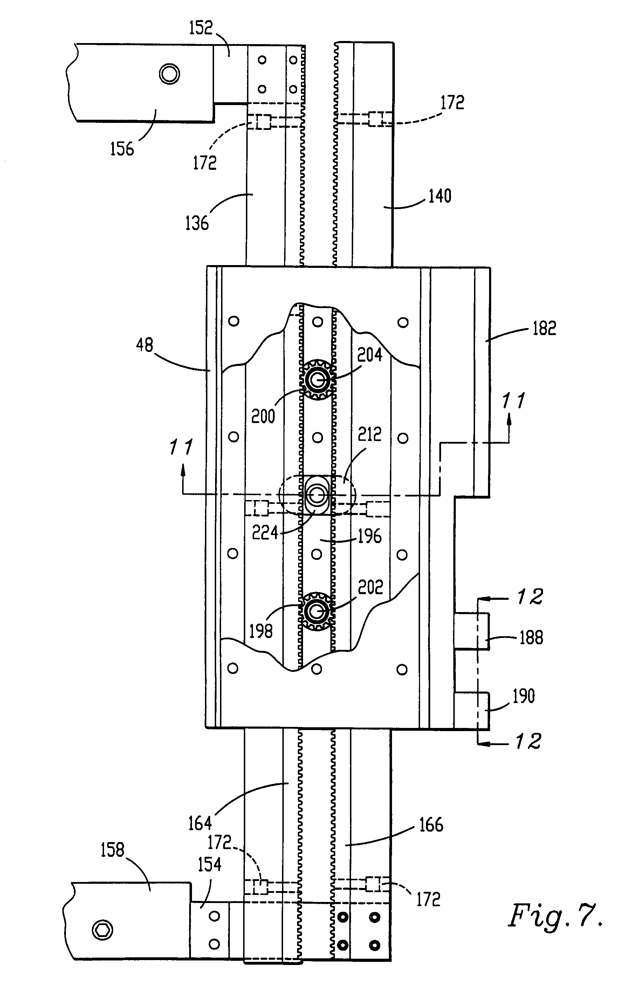

Relative movement of the rails 130, 132 is effected by means of the connection assemblies 146, 148. Attention is particularly directed to Fig. 7 which illustrates this construction. It will first of all be observed that the legs 136 and 140, as well as legs 134 and 138, are provided with opposed, facing, toothed racks 164, 166 and 168, 170. The racks are secured to the corresponding legs by means of bolt members 172.

The connector assemblies 146, 148 each include a base plate 174, 175 presenting a pair of elongated, rectangular in cross-section through-passages 176, 178 respectively adapted to slidably receive the legs 136, 140 and legs 134, 138. An apertured cover plate 179 is affixed to each base plate in covering relationship to the passageways 176, 178. The outboard edge of the base plates 174, 175 present corresponding beveled surfaces 180, 182, as well as respective notches 184, 186 and spaced, outwardly extending, cooperatively beveled bottom extensions 188, 190 and 192, 194.

The base members 174, 175 further include an upstanding boss section 196 extending along the length thereof between the passageways 176, 178. A pair of spaced, rotatable pinions 198, 200 are secured to boss section 196 and extend into apertures through cover plate 179. Each pinion is further provided with a recessed rotation head 202, 204, 206 and 208 permitting manual rotation of the respective pinions. As illustrated in Fig. 7, the pinions 198, 200 are in operative engagement with the racks 164, 166, and also the pinions 206, 208 are similarly in engagement with the racks 168, 170.

The locking mechanism for each assembly 146, 148 is best illustrated in Figs. 7 and 11. In particular, at the central region of each base section 174, 175, an oval-shaped opening 210 is provided. A similarly configured clamping plate 212 is situated within opening 210 and presents an upstanding boss region 214 having a central, threaded bore 216 therethrough. A clamping screw 218, having a recessed driving head 220, extends into the bore 216, and receives a pair of clamping washers 222, 224 on the shank thereof. As best seen in Fig. 11, the plate 179 is apertured to permit access to the head 220.

In the use of adjustable support 128, the rails 130, 132 are first opened sufficiently to accommodate a die 150. This is accomplished by loosening the clamping screws 218 via heads 220, and thereafter rotating the pinions 198, 200 in the appropriate direction. At this point, the die 150 is placed between the rails 130, 132, and the latter are moved together by appropriate rotation of the drive pinions until the upper and lower margins of the die support board are firmly engaged by the rails 130, 132. At this point, the clamping screws 218 are retightened, so that the plates 212 are drawn against the associated legs 136, 140 and 134, 138, thereby locking the legs into position.

The entire subassembly represented by the support 128 and the die 150 can then be installed on frame assembly 30. Again referring to Fig. 6, it will be seen that outboard edges 180, 182 of the respective assemblies 146, 148 mate with the corresponding beveled pieces 100, 102, and that the upper horizontal surfaces defining the notches 184, 186 abut the surfaces 108, 110 of locating blocks 104, 106. As a consequence, the entire support 128 is oriented and maintained within frame assembly 30 in the same fashion as die 112 previously described.

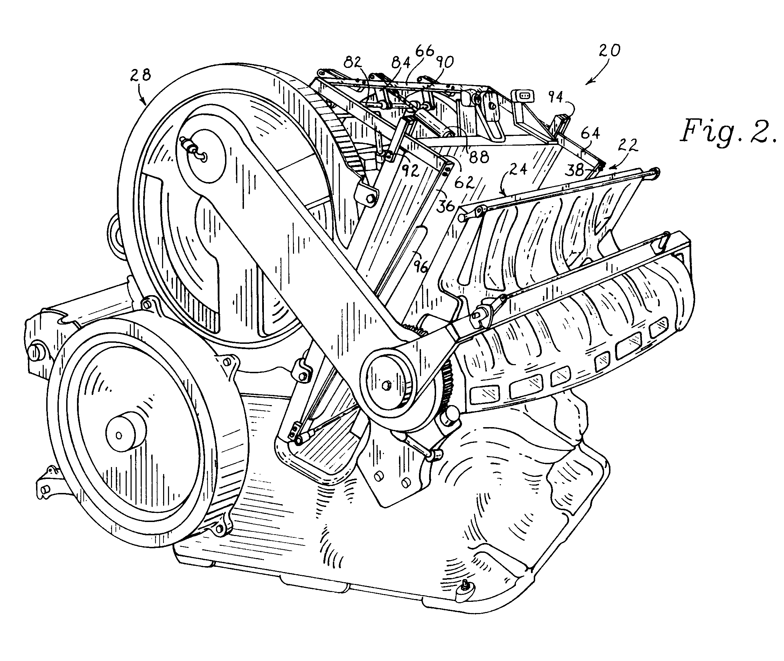

In the use of the die-holding apparatus 22, whether with a conventional die 112 or with the adjustable support 128, the piston and cylinder assembly 86 is first operated to shift the frame assembly 30 to a die-release position wherein the frame assembly is pivoted away from platen 26 as shown in Figs. 2 and 4. In this orientation, it is a simple matter to insert a die 112 by sliding the same downwardly between the frame arms 36, 38 until the beveled surfaces provided on the side margins of backing board 114 or the connector assemblies 146, 148 come into mating engagement with the beveled pieces 100, 102, and the upper horizontal surfaces partially defining the notches 124, 126 or 184, 186 contact the upper ends of abutment blocks 104, 106. When this occurs, it will be appreciated that the die or support assembly as the case may be is precisely located relative to the die-holding apparatus 22 and thus the supporting platen 26. Thereupon, the piston and cylinder assembly 86 is again actuated to draw the frame assembly 30 against platen 26 so that the die carried thereby comes into engagement with the platen.

Die cutting operations can then proceed normally, it being understood that the die-holding apparatus 22 does not impede or interfere with normal die cutting operations. When it is desired to adjust the die because of wear, or change the die for a new cutting configuration, the above procedure is repeated, i.e., the piston and cylinder assembly 86 is operated to move the assembly 30 to its die-release position, the existing die is either modified by application of backing tape or removed completely by pulling the die upwardly out of engagement with the arms 36, 38, a modified or new die is installed, and the assembly 30 is moved back to its locked position.

In typical practice, a conventional control is provided for operating the piston and cylinder assembly 86, with interlocks to prevent unintended operation during normal die cutting operations.

## Claims

1. Apparatus for holding a cutting die in place upon a platen, and for permitting easy changeover of cutting dies, said apparatus comprising:
frame means including a pair of spaced apart, die-holding frame arms each presenting a first and a second end;
means for mounting said frame means in association with said platen for pivotal movement of the arms in order to permit movement of said arms between a die-holding position adjacent said platen, and a die-release position wherein said second frame arm ends are spaced from said platen a distance permitting removal of said die from the frame means; and
means operably coupled with said frame arms for selective pivotal movement thereof between said die-holding and die-releasing positions thereof.

2. The apparatus as set forth in claim 1, each of said frame arms including an elongated die-holding beveled surface for engaging said cutting die and assisting in the holding of the cutting die against said platen when said frame arms are in the die-holding position thereof.

3. The apparatus as set forth in claim 1, each of said frame arms including a retaining plate secured to the outer surface thereof for cooperatively holding said cutting die between said frame arms.

4. The apparatus as set forth in claim 3, each of said retaining plates having a width greater than that of the corresponding frame arm and extending inwardly therefrom.

5. The apparatus as set forth in claim 1, said mounting means including an elongated hinge rod operatively coupled to and extending between said first ends of said frame arms for permitting relative pivotal movement of the frame arms.

6. The apparatus as set forth in claim 1, said frame moving means including a piston and cylinder assembly operably coupled with said frame arms.

7. The apparatus as set forth in claim 6, including linkage means operatively coupled with said frame arms adjacent said second ends thereof, said piston and cylinder assembly being secured to said linkage means.

8. The apparatus as set forth in claim 7, said linkage means including a rigid, generally U-shaped section having a pair of laterally spaced apart legs respectively coupled to a corresponding one of said second ends, and a cross-piece interconnecting said legs remote from said second ends, said linkage means further including a toggle linkage assembly coupled with said cross-piece, said piston and cylinder assembly being operatively secured to said toggle linkage assembly for movement of said frame arms between said die-holding and die-releasing positions thereof.

9. The apparatus as set forth in claim 8, including a pair of guide brackets secured to said platen and receiving said legs for guiding the same.

10. An adjustable support for holding cutting dies of varying effective heights, comprising:
a pair of elongated, spaced apart, opposed rails each presenting axially spaced ends and including structure intermediate said ends for engaging a cutting die margin;
a connector leg coupled to each of said rail ends with the longitudinal axes of said connector legs being transverse to the longitudinal axes of said rails,
said connector legs defining a connector leg set proximal to each end of said rails, each of said sets having a pair of juxtaposed, oppositely extending connector legs respectively secured to a corresponding rail; and
connector means joining the connector legs of each set thereof and including structure for permitting relative axial shifting of the legs of each set in order to effect corresponding movement of said rails relative to each other, and for locking said connector legs of each set thereof at any one of a number of shifted positions thereof.

11. The support as set forth in, claim 10, each of said juxtaposed connector legs including a toothed rack section, said connector means including a rotatable pinion operatively engaging said rack sections.

12. The support as set forth in claim 10, said connector means including an adjustable friction clamp.

13. In combination:
an adjustable support for holding cutting dies of varying effective heights, including--
a pair of elongated, laterally spaced apart, opposed rails each presenting axially spaced ends and including structure intermediate said ends for engaging a cutting die margin;
a connector leg coupled to each of said rail ends with the longitudinal axes of said connector legs being transverse to the longitudinal axes of said rails,
said connector legs defining a connector leg set proximal to each end of said rails, each of said sets having a pair of juxtaposed, oppositely extending connector legs respectively secured to a corresponding rail;
connector means joining the connector legs of each set thereof and including structure for permitting relative axial shifting of the legs of each set in order to effect corresponding movement of said rails relative to each other, and for locking said connector legs of each set thereof at any one of a number of shifted positions thereof; and
apparatus for holding said adjustable support in place upon a platen, including--
frame means including a pair of spaced apart frame arms each presenting a first and a second end and including structure for engaging respective portions of said adjustable support;
means for mounting said frame means in association with said platen for pivotal movement of each of said arms in order to permit movement of said arms between an operative position adjacent said platen, and a release position wherein said second frame arm ends are spaced from said platen a distance permitting removal of said die from said support; and
means operably coupled with said frame arms for selective movement thereof between said operative and release positions thereof.

14. A method of mounting and changing cutting dies associated with a platen die-cutting machine, said die-cutting machine including a shiftable platen adapted to carry a cutting die thereon and a base, said platen being movable between a cutting position adjacent said base and an open position wherein the platen is spaced from the base, said method comprising the steps of:
placing said cutting die in an operative position adjacent said platen and maintaining the operative position of said die by means of a pair of laterally spaced apart frame arms each engaging and holding a respective margin of said die;
pivoting said frame arms away from said platen for pivoting said cutting die away from said platen;
removing said cutting die from said frame arms while the latter are in said pivoted-away position, replacing said cutting die with a replacement cutting die, and interengaging said frame arms and respective margins of said replacement die; and
pivoting said frame arms back towards said platen until said replacement die assumes said operative position.
